# EUROPEAN PATENT SPECIFICATION

(11) **EP 3 352 078 B1**
(45) Date of publication and mention of the grant of the patent: **10.03.2021**
(21) Application number: 16845679.6
(22) Date of filing: 09.09.2016
(51) Int. Cl.: G06F 11/00, G06F 11/07, G06F 11/14

(54) **TASK OPERATION RETRY METHOD AND DEVICE**
VERFAHREN UND VORRICHTUNG ZUR WIEDERHOLUNG VON AUFGABENOPERATIONEN
PROCÉDÉ ET DISPOSITIF DE RELANCE D'OPÉRATION DE TÂCHE

(30) Priority: 18.09.2015 CN 201510601116
(43) Date of publication of application: 25.07.2018
(73) Proprietor: Alibaba Group Holding Limited, Grand Cayman (KY)
(72) Inventor: LI, Qiang, Hangzhou Zhejiang 311121 (CN)
(74) Representative: Finnegan Europe LLP
(86) International application number: PCT/CN2016/098508
(87) International publication number: WO 2017/045565

(56) References cited:
- WO-A1-2013/137917
- CN-A- 1 365 114
- CN-A- 103 988 547
- CN-A- 103 995 691
- CN-A- 104 346 215
- US-A1- 2010 037 223
- US-A1- 2013 100 795
- US-A1- 2014 025 763

## Description

### Technical Field

The present application relates to the field of computer processing technologies, and in particular, to an operation retry method for a job and an operation retry apparatus for a job.

### Background Art

In a computer system, a job interacts with another system (service) when running, and the job fails to run when short-time unavailability (service interruption) occurs in another system (service).

In a big data scenario, when a running error occurs in an existing product, the job is generally retried, that is, wait until another system (service) recovers, such that the job continues to run to ensure the success rate of the job to the greatest extent.

Otherwise, if all retries fail, the entire job fails.

For example, if another system (service) is unavailable for as long as 10 minutes, a time interval between retries generally needs to be greater than 10 minutes, and then it can be ensured that the job can continue to run when such short-time unavailability occurs.

If retries are all adjusted to 10 minutes, the retry costs are increased undoubtedly, which are reflected in two aspects as follows:
1. With respect to a short job, for example, a job expected to run for only 30 minutes, an actual running time due to the retry may be longer than a normal running time.
2. When an administrator needs to manually stop the job, especially when an external system (service) is unavailable, the administrator needs to manually perform operation and maintenance to stop the job and make some adjustments and deployments. If a job retry happens to take place at that time, the job cannot be completely stopped until the job has been retried for 10 minutes.

Therefore, with respect to retry time selection at present, an average value or a time satisfying a particular percentage, rather than a maximum retry time, is generally selected.

For example, if the unavailable time is 1 minute for all external systems (services), and a maximum unavailable time is 10 minutes, a retry time of 2 minutes is generally selected to ensure that most retries can succeed.

However, with respect to a long job, such a solution may increase the retry costs.

For example, for a job running 10 hours, when the 10-hour job has run 80%, that is, has run 8 hours, if a 10-minute service interruption occurs which exceeds the maximum retry time, the job fails, and if the job is re-executed, it means that the previous 8-hour running is wasted, and the cost is huge.

Chinese Patent Application No. CN103988547 is directed towards methods and an apparatus for handling failure and retry mechanisms during eHRPD pre-registration. International Patent Application No. WO2013137917 is directed towards determining a schedule for a job to replicate an object stored on a storage appliance. U.S. Patent Application Publication No. 2010037223 is directed towards a storage apparatus and a method for controlling the same. U.S. Patent Application Publication No. 2014025763 is directed towards a method and system for adaptive delivery of digital messages.

### Summary of the Invention

In view of the foregoing problem, the invention, which is defined in detail in the appended independent claims 1 and 6, provides an operation retry method for a job and a corresponding operation retry apparatus for a job to overcome the problem or at least partially solve the problem. Preferred embodiments of the invention are defined in the appended dependent claims.

To solve the foregoing problem, the embodiments of the present application disclose an operation retry method for a job, including:
detecting whether an operation in the job fails; and if yes, collecting statistics on a progress of the job;
calculating a retry time according to the progress of the j ob; and
re-executing the operation after waiting for the retry time.

Optionally, the job is a data synchronization job, and the step of detecting whether an operation in the job fails includes:
determining that an operation in the data synchronization job fails when data reading from a source device fails or times out;
   and/or
determining that an operation in the data synchronization job fails when interaction with a data synchronization service fails or times out;
   and/or
determining that an operation in the data synchronization job fails when data writing into a destination device fails or times out.

The step of calculating a retry time according to the progress of the job includes:
configuring an incremental factor according to the progress of the job;
calculating a retry time base according to a preset interval; and
calculating the retry time according to the incremental factor and the retry time base.

Optionally, the step of calculating a retry time base according to a preset interval includes:
acquiring current retry times; and
calculating the product of the preset interval and the current retry times as the time base;
   or
using the current retry times as an exponent to increase the preset interval as the time base.

Optionally, before the step of collecting statistics on a progress of the job, the method further includes:
judging whether the operation needs to be re-executed; and
if yes, executing the step of collecting statistics on a progress of the job; or
if no, exiting re-execution of the operation.

Optionally, the step of judging whether the operation needs to be re-executed includes:
judging whether a times condition and/or a state condition is satisfied; and
if yes, determining that the operation does not need to be re-executed; or
if no, determining that the operation needs to be re-executed;
wherein the times condition is that the current retry times exceed a preset retry times threshold; and
the state condition is that the job is stopped.

To solve the foregoing problem, the embodiments of the present application further disclose an operation retry apparatus for a job, including:
a job detection module configured to detect whether an operation in the job fails; and if yes, call a progress statistics module;
the progress statistics module configured to collect statistics on a progress of the job;
a retry time calculation module configured to calculate a retry time according to the progress of the job; and
a job retry module configured to re-execute the operation after waiting for the retry time.

Optionally, the job detection module includes:
a first determination submodule configured to determine that an operation in the data synchronization job fails when data reading from a source device fails or times out;
   and/or
a second determination submodule configured to determine that an operation in the data synchronization job fails when interaction with a data synchronization service fails or times out;
   and/or
a third determination submodule configured to determine that an operation in the data synchronization job fails when data writing into a destination device fails or times out.

The retry time calculation module includes:
an incremental factor calculation submodule configured to configure an incremental factor according to the progress of the job;
a retry time base calculation submodule configured to calculate a retry time base according to a preset interval; and
an increment adjustment submodule configured to calculate the retry time according to the incremental factor and the retry time base.

Optionally, the retry time base calculation submodule includes:
a retry times acquisition unit configured to acquire current retry times; and
a constant calculation unit configured to calculate the product of the preset interval and the current retry times as the time base;
   or
an exponent calculation unit configured to use the current retry times as an exponent to increase the preset interval as the time base.

Optionally, the operation retry apparatus for a job further includes:
a retry determination module configured to judge whether the operation needs to be re-executed; and if yes, call the progress statistics module; or if no, call a retry exit module; and
the retry exit module configured to exit re-execution of the operation.

Optionally, the retry determination module includes:
a condition judgment submodule configured to judge whether a times condition and/or a state condition is satisfied; and if yes, call a fourth determination submodule; or if no, call a fifth determination submodule;
the fourth determination submodule configured to determine that the operation does not need to be re-executed; and
the fifth determination submodule configured to determine that the operation needs to be re-executed;
wherein the times condition is that the current retry times exceed a preset retry times threshold; and
the state condition is that the job is stopped.

The embodiments of the present application include the following advantages:
In the embodiments of the present application, when an operation in a job fails, a retry time is adaptively calculated according to a progress of the job, which greatly increases the length of the retry time, especially for a long job; the job is thereby retried dynamically, which can cope with longer service interruption, avoids device resource waste caused by job failure and job re-execution, and greatly reduces the retry costs while ensuring the success rate of the job.

In a retry policy according to the embodiments of the present application, a state of the job is additionally detected, and when the job is stopped, the retry is terminated, which implements fast retry ending and exiting, further reduces the device resource waste, and reduces the retry costs.

### Brief Description of the Drawings

FIG. 1 is a step flowchart of Embodiment 1 of an operation retry method for a job according to the present application;
FIG. 2 is an architecture diagram of an offline synchronization tool according to an embodiment of the present application;
FIG. 3 is a step flowchart of Embodiment 2 of an operation retry method for a job according to the present application;
FIG. 4 is a structural block diagram of Embodiment 1 of an operation retry apparatus for a job according to the present application; and
FIG. 5 is a structural block diagram of Embodiment 2 of an operation retry apparatus for a job according to the present application.

### Detailed Description

To make the objectives, features, and advantages of the present application clearer and more comprehensible, the present application is described below in further detail with reference to the accompanying drawings and specific implementation manners.

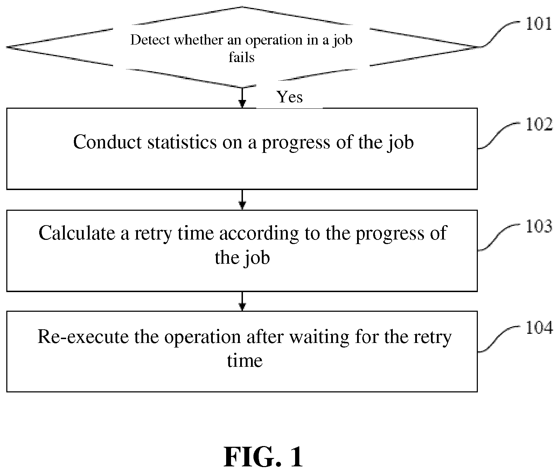

Referring to FIG. 1, a step flowchart of Embodiment 1 of an operation retry method for a job according to the present application is shown, which may specifically include the following steps:
Step 101. It is detected whether an operation in the job fails. Step 102 is executed if yes.

In some operating systems, a job is an execution unit distributed by a computer operator (or a program referred to as a job scheduler) to the operating systems.

For example, the job may be running an application program, such as an employee payroll program executed every week.

The job usually runs in a batch mode.

The operator or job scheduler distributes a batch of jobs (employee payroll, cost analysis, employee file upgrade and the like) to be executed to the operating system. These jobs will be executed when the operating system does not execute an interactive operation sensitive to time.

In this embodiment of the present application, for example, the job is a data synchronization job, and the data synchronization job may be executed by using a synchronization tool.

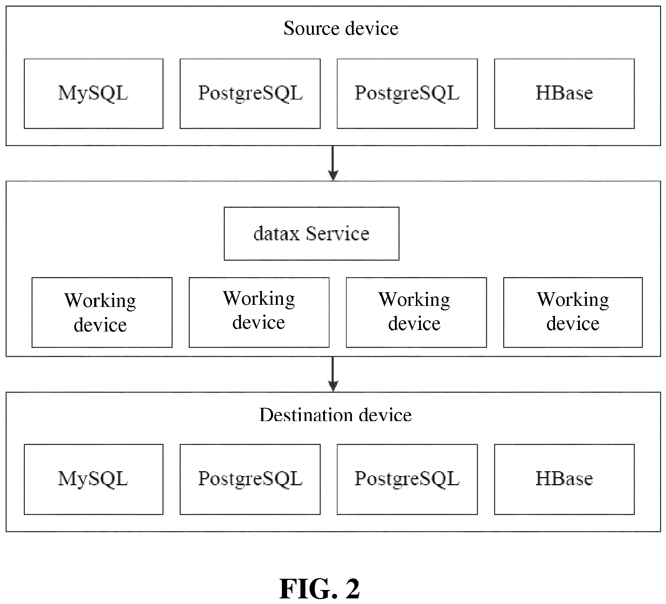

As shown in FIG. 2, the synchronization tool is a universal tool for implementing synchronization among a plurality of databases.

The synchronization tool includes a series of workers (working devices) having a datax Service (data synchronization service).

The datax Service receives a command for the job (for example, starting the job, stopping the job or the like), and a worker is chosen to execute the job and returns a state to the datax Service.

During synchronization, the working device reads data from a source device, and writes the data into a destination device.

The source device and the destination device are any relational databases (for example, MySQL, PostgreSQL, and HBase) or non-relational databases.

For example, the working device may read data from MySQL, and write the data into HBase.

When being executed, the job interacts with the source device, the destination device, and the datax Service.

During data reading from the source device (an operation), a result returned by a data reading Application Programming Interface (API) provided by the source device is usually success, failure, or timeout.

It may be determined that the operation in the data synchronization job fails when data reading from the source device fails or times out.

During interaction with the datax Service (an operation), a result returned by an interaction API provided by the datax Service is usually success, failure, or timeout.

It may be determined that the operation in the data synchronization job fails when interaction with the data synchronization service fails or times out.

During data writing into the destination device (an operation), a result returned by a data writing API provided by the destination device is usually success, failure, or timeout.

It may be determined that the operation in the data synchronization job fails when data writing into the destination device fails or times out.

In cases of failure and timeout, it is determined that the job fails and may be retried.

Certainly, the job and the failure judgment manner thereof above are merely examples, and when this embodiment of the present application is implemented, another job and a failure judgment manner thereof may be set according to an actual situation, which is not limited in this embodiment of the present application. Besides, in addition to the job and the failure judgment manner thereof above, those skilled in the art may further use another job and a failure judgment manner thereof according to an actual need, which is not limited in this embodiment of the present application.

Step 102. Statistics on a progress of the job are conducted.

During an actual application, the working device may conduct statistics on the progress of the job when executing the job.

For example, statistics are conducted in batches, where a complete job may be divided into a plurality of fragments, and statistics on a progress of the job can be conducted by conducting statistics on completion degree of the fragments.

For example, a complete job is divided into 10,000 fragments, and the progress of the job is 1% forward when every 100 fragments are completed.

Step 103. A retry time is calculated according to the progress of the job.

In this embodiment of the present application, the progress of the job is used as a factor, and the retry time is calculated according to the factor. The retry time is in direct proportion to the progress of the job, so that longer service interruption can be coped with.

For example, a retry time at a progress of 80% is obviously greater than a retry time at a progress of 30%, so that the job has sufficient time to wait for a service to recover, so as to avoid waste caused by job re-execution.

In an embodiment of the present application, step 103 may include the following substeps:
Substep S11. An incremental factor is configured according to the progress of the job.

During an actual application, the incremental factor is decided mainly by a running state of the job, and can represent an impact of the progress of the job on the retry time.

Generally, the progress of the job is in direct proportion to the incremental factor, that is, a larger progress of the job indicates a larger incremental factor; conversely, a smaller progress of the job indicates a smaller incremental factor.

For example, a job with a progress of 15% has an incremental factor of 1.15, and a job with a progress of 80% has an incremental factor of 1.80.

Substep S12. A retry time base is calculated according to a preset interval.

As applied in this embodiment of the present application, a retry policy may be preset, for example, retrying according to a constant time or on an exponential growth basis, an interval, allowed maximum retry times or the like.

If current retry times is acquired, the retry time base may be calculated according to the retry policy.

If the retry policy is a constant-time retry policy, the retry is executed at an interval. For example, it is specified that the retry is executed three times at an interval of 30 seconds.

Then the product of the preset interval and the current retry times may be calculated as the time base.

If the retry policy is an exponential-growth retry policy, the current retry times may be used as an exponent, and the preset interval is increased as the time base.

In an example, the time base = the interval * 2n-1, where n is the current retry times.

For example, it is specified that the retry is executed four times at an interval of 10 s, that is, a time for the first retry is 10 s, a time for the second retry is 10 s*2, a time for the third retry is 10 s*4, and a time for the fourth retry is 10 s*8.

Substep S13. The retry time is calculated according to the incremental factor and the retry time base.

Usually, the product of the incremental factor and the retry time base may be directly calculated as the retry time.

Step 104. The operation is re-executed after waiting for the retry time.

In this embodiment of the present application, the job may be retried after waiting for the retry time.

For example, the job is a data synchronization job. When the job fails, data reading from the source device may be re-executed, or interaction with the datax Service may be re-executed, or data writing into the destination device may be re-executed or the like.

In a big data scenario, when a running error occurs in an existing product, the job is generally retried, that is, wait until another system (service) recovers, such that the job continues to run to ensure the success rate of the job to the greatest extent.

For example, during offline synchronization using the datax Service, the synchronization amount on an electronic business platform is about 300 T one day, and there are about 60,000 synchronization jobs every day.

These jobs are mostly completed in different time, some are completed in 30 minutes, some are completed in 2 hours, some are completed in 10 hours, and some are even completed in a longer time.

With respect to a job completed in a relatively short time (for example, 30 minutes), that is, a short job, if an occasional error, such as network disconnection or service restart, occurs and is still not removed when the retry ends, the costs for re-executing the entire job are generally acceptable.

However, with respect to a job completed in a relatively long time (for example, 10 hours), that is, a long job, if the retry cannot succeed when the running progress has reached more than 50%, the costs for re-executing the entire job are relatively high.

If retry times or retry intervals are simply adjusted for the retry, all jobs will have the same retry costs.

For example, the retry is adjusted to 10 minutes. Then all short jobs may even have a retry time longer than an actual working time, which is inappropriate and leads to a huge cost.

Especially when a user wants to stop a job and the job happens to be retried, the user has to wait until the retry ends, and then the job can be ended.

The existing retry policy can only cope with the problem of a low job success rate, where retry times or time intervals are adjusted, and regardless of the constant-time or exponential-growth retry policy, the problem of retry costs cannot be solved, and extra retry costs are caused.

In this embodiment of the present application, when an operation in a job fails, a retry time is adaptively calculated according to a progress of the job, which greatly increases the length of the retry time, especially for a long job; the job is thereby retried dynamically, which can cope with longer service interruption, avoids device resource waste caused by job failure and job re-execution, and greatly reduces the retry costs while ensuring the success rate of the job.

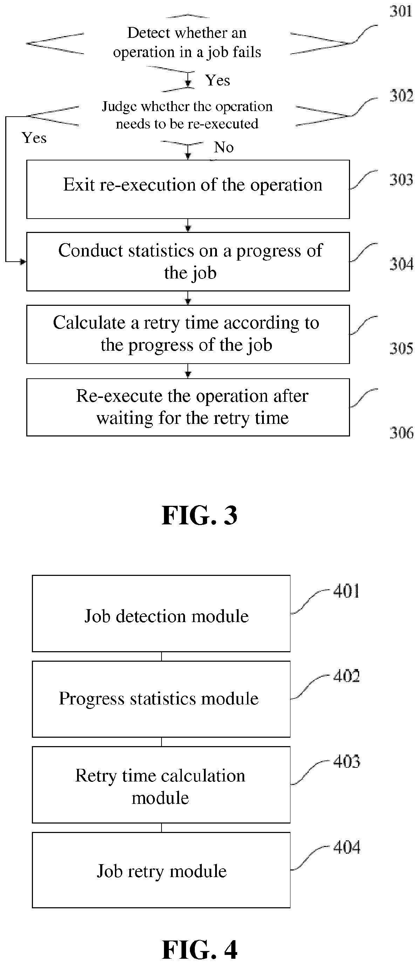

Referring to FIG. 3, a step flowchart of Embodiment 2 of an operation retry method for a job according to the present application is shown, which may specifically include the following steps:
Step 301. It is detected whether an operation in the job fails. Step 302 is executed if yes.
Step 302. It is judged whether the operation needs to be re-executed. Step 304 is executed if yes. Step 303 is executed if no.
Step 303. Re-execution of the operation is exited.

As applied in this embodiment of the present application, a retry policy may be preset, and the job is retried when conforming to the retry policy; otherwise, the retry is exited.

In an embodiment of the present application, step 302 may include the following substeps:
Substep S21. It is judged whether a times condition and/or a state condition is satisfied. Substep S22 is executed if yes. Substep S23 is executed if no.

Substep S22. It is determined that the operation does not need to be re-executed.

Substep S23. It is determined that the operation needs to be re-executed.

The times condition is that the current retry times exceed a preset retry times threshold.

The state condition is that the job is stopped.

In a specific implementation, retry policies such as retrying according to a constant time or on an exponential growth basis, allowed maximum retry times (that is, a retry times threshold) and the like all may be specified during job configuration, that is, when configuring the job, a user specifies how to execute the retry if an error occurs in the job.

Therefore, when the job is distributed to a working device, the working device executes retry according to this retry policy. Every time the retry is executed, current retry times may be recorded for comparison with the allowed maximum retry times (that is, the retry times threshold). When the allowed maximum retry times (that is, the retry times threshold) are exceeded, the retry is stopped; otherwise, the retry is continued.

Because the job is executed on the working device, the working device can learn an execution state of the job when executing the job, for example, normal execution, stopping execution, an execution time, an execution progress, and so on.

If the user wants to manually stop the job, especially when the user needs to manually perform operation and maintenance to stop the job and make some adjustments and deployments because an external system (service) is unavailable, the working device needs to stop the job as soon as possible after receiving a job stop instruction.

If the job happens to be retried, according to a conventional retry policy, the job cannot be successfully stopped until the entire retry completely ends.

For example, a user configures that a job is retried 10 times, and then the user finds that a configuration error occurs somewhere and the job needs to be stopped, but the job happens to be retried. Then the user has to wait until 10 retries completely end, and then the job can be correctly stopped.

In a retry policy according to this embodiment of the present application, a state of the job is additionally detected, and when the job is stopped, the retry is terminated, which implements fast retry ending and exiting, further reduces the device resource waste, and reduces the retry costs.

Step 304. Statistics on a progress of the job are conducted.

Step 305. A retry time is calculated according to the progress of the job.

Step 306. The operation is re-executed after waiting for the retry time.

It should be noted that the method embodiments are all described as combinations of a series of actions for simple description, but those skilled in the art should know that the present application is not limited by the described action orders, because some steps may be performed in other orders or at the same time according to the embodiments of the present application. In addition, those skilled in the art should also know that all the embodiments described in the specification are preferred embodiments, and the related actions are not necessarily mandatory to the present application.

Referring to FIG. 4, a structural block diagram of Embodiment 1 of an operation retry apparatus for a job according to the present application is shown, which may specifically include the following modules:
a job detection module 401 configured to detect whether an operation in the job fails; and if yes, call a progress statistics module 402;
the progress statistics module 402 configured to conduct statistics on a progress of the job;
a retry time calculation module 403 configured to calculate a retry time according to the progress of the job; and
a job retry module 404 configured to re-execute the operation after waiting for the retry time.

In an embodiment of the present application, the job detection module 401 may include the following submodules:
a first determination submodule configured to determine that an operation in the data synchronization job fails when data reading from a source device fails or times out;
   and/or
a second determination submodule configured to determine that an operation in the data synchronization job fails when interaction with a data synchronization service fails or times out;
   and/or
a third determination submodule configured to determine that an operation in the data synchronization job fails when data writing into a destination device fails or times out.

In an embodiment of the present application, the retry time calculation module 403 may include the following submodules:
an incremental factor calculation submodule configured to configure an incremental factor according to the progress of the job;
a retry time base calculation submodule configured to calculate a retry time base according to a preset interval; and
an increment adjustment submodule configured to calculate the retry time according to the incremental factor and the retry time base.

In an embodiment of the present application, the retry time base calculation submodule may include the following units:
a retry times acquisition unit configured to acquire current retry times; and
a constant calculation unit configured to calculate the product of the preset interval and the current retry times as the time base;
   or
an exponent calculation unit configured to use the current retry times as an exponent to increase the preset interval as the time base.

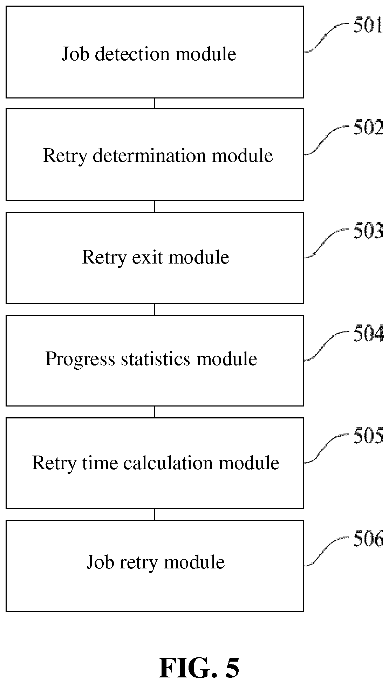

Referring to FIG. 5, a structural block diagram of Embodiment 2 of an operation retry apparatus for a job according to the present application is shown, which may specifically include the following modules:
a job detection module 501 configured to detect whether an operation in the job fails; and if yes, call a retry determination module 502;
the retry determination module 502 configured to judge whether the operation needs to be re-executed; and if yes, call the progress statistics module 504; or if no, call a retry exit module 503; and
the retry exit module 503 configured to exit re-execution of the operation;
the progress statistics module 504 configured to conduct statistics on a progress of the job;
a retry time calculation module 505 configured to calculate a retry time according to the progress of the job; and
a job retry module 506 configured to re-execute the operation after waiting for the retry time.

In an embodiment of the present application, the retry determination module 502 may include the following submodules:
a condition judgment submodule configured to judge whether a times condition and/or a state condition is satisfied; and if yes, call a fourth determination submodule; or if no, call a fifth determination submodule;
the fourth determination submodule configured to determine that the operation does not need to be re-executed; and
the fifth determination submodule configured to determine that the operation needs to be re-executed;
wherein the times condition is that the current retry times exceed a preset retry times threshold, and
the state condition is that the job is stopped.

Apparatus embodiments are basically similar to the method embodiments, and thus are described briefly. For related parts, reference may be made to the description in the method embodiments.

The embodiments in this specification are all described in a progressive manner. Description of each of the embodiments focuses on differences from the other embodiments, and reference may be made to each other for the same or similar parts among respective embodiments.

Those skilled in the art should understand that the embodiments of the present application may be provided as a method, an apparatus, or a computer program product. Therefore, the embodiments of the present application may be implemented as a complete hardware embodiment, a complete software embodiment, or an embodiment combining software and hardware. Moreover, the embodiments of the present application may be a computer program product implemented on one or more computer usable storage media (including, but not limited to, a magnetic disk memory, a CD-ROM, an optical memory, and the like) including computer usable program codes.

In a typical configuration, the computer device includes one or more processors (CPUs), an input/output interface, a network interface, and a memory. The memory may include a volatile memory, a random access memory (RAM) and/or a non-volatile memory or the like in a computer readable medium, for example, a read-only memory (ROM) or a flash RAM. The memory is an example of the computer readable medium. The computer readable medium includes non-volatile and volatile media as well as movable and non-movable media, and can implement information storage by means of any method or technology. Information may be a computer readable instruction, a data structure, and a module of a program or other data. An example of the storage medium of the computer includes, but is not limited to, a phase change memory (PRAM), a static random access memory (SRAM), a dynamic random access memory (DRAM), other types of RAMs, a ROM, an electrically erasable programmable read-only memory (EEPROM), a flash memory or other memory technologies, a compact disk read-only memory (CD-ROM), a digital versatile disc (DVD) or other optical storages, a cassette tape, a magnetic tape/magnetic disk storage or other magnetic storage devices, or any other non-transmission medium, and can be used to store information accessible to the computing device. According to the definition therein, the computer readable medium does not include transitory media, such as a modulated data signal and a carrier.

The embodiments of the present application are described with reference to flowcharts and/or block diagrams of the method, terminal device (system) and computer program product according to the embodiments of the present application. It should be understood that a computer program instruction may be used to implement each process and/or block in the flowcharts and/or block diagrams and combinations of processes and/or blocks in the flowcharts and/or block diagrams. These computer program instructions may be provided to a general-purpose computer, a special-purpose computer, an embedded processor, or a processor of another programmable data processing terminal device to generate a machine, so that the instructions executed by a computer or a processor of another programmable data processing terminal device generate an apparatus for implementing a specified function in one or more processes in the flowcharts and/or in one or more blocks in the block diagrams.

These computer program instructions may also be stored in a computer readable memory that can instruct the computer or another programmable data processing terminal device to work in a particular manner, so that the instructions stored in the computer readable memory generate an article of manufacture that includes an instruction apparatus. The instruction apparatus implements a specified function in one or more processes in the flowcharts and/or in one or more blocks in the block diagrams.

These computer program instructions may also be loaded onto a computer or another programmable data processing terminal device, so that a series of operations and steps are performed on the computer or another programmable terminal device, thereby generating computer-implemented processing. Therefore, the instructions executed on the computer or another programmable terminal device provide steps for implementing a specified function in one or more processes in the flowcharts and/or in one or more blocks in the block diagrams.

Although preferred embodiments of the present application have been described, those skilled in the art can make extra changes and modifications to these embodiments once they learn the basic inventive concept. Therefore, the appended claims are intended to be construed as covering the preferred embodiments and all changes and modifications falling within the scope of the embodiments of the present application.

In the end, it should be further noted that relational terms herein, such as first and second, are only used to distinguish one entity or operation from another entity or operation, and do not necessarily require or imply that any actual relationship or sequence exists between these entities or operations. Moreover, the terms "include", "comprise", or any other variants thereof are intended to cover non-exclusive inclusion, so that a process, a method, an article, or a terminal device that includes a list of elements not only includes those elements but also includes other elements which are not expressly listed, or further includes elements inherent to the process, method, article, or terminal device. Unless otherwise specified, an element limited by "include a/an..." does not exclude other same elements existing in the process, the method, the article, or the terminal device that includes the element.

An operation retry method for a job and an operation retry apparatus for a job according to the present application are described above in detail. Although the principles and implementation manners of the present application are described by using specific examples herein, the foregoing description of the embodiments is only intended to help understand the method and core idea of the method of the present application. Meanwhile, persons of ordinary skill in the art may make variations to the specific implementation manners and application scopes according to the idea of the present application. In conclusion, the content of the specification should not be construed as a limitation to the present application.

## Claims

1. A computer-implemented operation-retry method for a job, comprising:
detecting (101, 301) whether an operation in the job fails; and
upon detecting that the operation in the job fails:
collecting statistics (102, 304) on a progress of the job;
configuring an incremental factor according to the progress of the job;
calculating a retry time base according to a preset interval;
calculating a retry time according to the incremental factor and the retry time base; and
re-executing (104, 306) the operation after waiting for the calculated retry time.

2. The method according to claim 1, wherein the job is a data synchronization job, and the step of detecting whether an operation in the job fails comprises:
determining that an operation in the data synchronization job fails when data reading from a source device fails or times out; and/or
determining that an operation in the data synchronization job fails when interaction with a data synchronization service fails or times out; and/or
determining that an operation in the data synchronization job fails when data writing into a destination device fails or times out.

3. The method according to claim 1, wherein the step of calculating a retry time base according to a preset interval comprises:
acquiring current retry times, and
calculating the product of the preset interval and the current retry times as the time base; or
using the current retry times as an exponent to increase the preset interval as the time base.

4. The method according to any of claims 1 to 3, wherein before the step of collecting statistics on a progress of the job, the method further comprises:
judging whether the operation needs to be re-executed; and
upon judging that the operation needs to be re-executed, executing the step of collecting statistics on a progress of the job, or
upon judging that the operation does not need to be re-executed, exiting re-execution of the operation.

5. The method according to claim 4, wherein the step of judging whether the operation needs to be re-executed comprises:
judging whether a times condition and/or a state condition is satisfied; and
upon judging that the times condition and/or the state condition is satisfied, determining that the operation does not need to be re-executed, or
upon judging that the times condition and the state condition are not satisfied, determining that the operation needs to be re-executed;
wherein the times condition is that the current retry times exceed a preset retry times threshold, and
wherein the state condition is that the job is stopped.

6. An operation-retry apparatus for a job, the apparatus comprising:
a job detection module (401) configured to detect whether an operation in the job fails and, upon detecting that the operation in the job fails , to call a progress statistics module;
the progress statistics module (402) configured to collect statistics on a progress of the job;
a retry time calculation module (403) configured to calculate a retry time according to the progress of the job, the retry time calculation module comprising:
an incremental factor calculation submodule configured to configure an incremental factor according to the progress of the job;
a retry time base calculation submodule configured to calculate a retry time base according to a preset interval; and
an increment adjustment submodule configured to adjust the retry time according to the incremental factor and the retry time base; and
a job retry module (404) configured to re-execute the operation after waiting for the calculated retry time.

7. The apparatus according to claim 6 wherein the job detection module comprises:
a first determination submodule configured to determine that an operation in the data synchronization job fails when data reading from a source device fails or times out; and/or
a second determination submodule configured to determine that an operation in the data synchronization job fails when interaction with a data synchronization service fails or times out; and/or
a third determination submodule configured to determine that an operation in the data synchronization job fails when data writing into a destination device fails or times out.

8. The apparatus according to claim 7, wherein the retry time base calculation submodule comprises:
a retry times acquisition unit configured to acquire current retry times; and
a constant calculation unit configured to calculate the product of the preset interval and the current retry times as the time base, or
an exponent calculation unit configured to use the current retry times as an exponent to increase the preset interval as the time base.

9. The apparatus according to any of claims 6 to 8, further comprising:
a retry determination module configured to:
judge whether the operation needs to be re-executed,
upon judging that the operating needs to be re-executed, call the progress statistics module, and
upon judging that the operating does not need to be re-executed, call a retry exit module; and
the retry exit module configured to exit re-execution of the operation.

10. The apparatus according to claim 9, wherein the retry determination module comprises:
a condition judgment submodule configured to:
judge whether a times condition and/or a state condition is satisfied,
upon judging that the times condition and/or the state condition is satisfied, call a fourth determination submodule, and
upon judging that the times condition and the state condition are not satisfied, call a fifth determination submodule;
the fourth determination submodule configured to determine that the operation does not need to be re-executed; and
the fifth determination submodule configured to determine that the operation needs to be re-executed;
wherein the times condition is that the current retry times exceed a preset retry times threshold, and
wherein the state condition is that the job is stopped.

11. A computer-readable medium storing instructions which, when executed by a processor, cause a computer to perform the method according to any of claims 1 to 5.

12. A computer program product comprising instructions that, when executed by a computer, cause the computer to perform the method as claimed in any of claims 1 to 5.

## Patentansprüche

1. Computerimplementiertes Vorgangswiederholungsverfahren für eine Aufgabe, umfassend:
Erfassen (101, 301), ob ein Vorgang in der Aufgabe fehlschlägt; und
beim Erfassen, dass der Vorgang in der Aufgabe fehlschlägt:
Sammeln von Statistiken (102, 304) über einen Fortschritt der Aufgabe;
Konfigurieren eines inkrementellen Faktors entsprechend dem Fortschritt der Aufgabe;
Berechnen einer Wiederholungszeitbasis gemäß einem voreingestellten Intervall;
Berechnen einer Wiederholungszeit gemäß dem inkrementellen Faktor und der Wiederholungszeitbasis; und
erneutes Ausführen (104, 306) des Vorgangs nach Warten auf die berechnete Wiederholungszeit.

2. Verfahren nach Anspruch 1, wobei die Aufgabe eine Datensynchronisationsaufgabe ist und der Schritt des Erfassens, ob ein Vorgang in der Aufgabe fehlschlägt, Folgendes umfasst:
Bestimmen, dass ein Vorgang in der Datensynchronisationsaufgabe fehlschlägt, wenn das Lesen von Daten von einer Quellvorrichtung fehlschlägt oder eine Zeitüberschreitung auftritt; und/oder
Bestimmen, dass ein Vorgang in der Datensynchronisationsaufgabe fehlschlägt, wenn Interaktion mit einem Datensynchronisationsdienst fehlschlägt oder eine Zeitüberschreitung auftritt; und/oder
Bestimmen, dass ein Vorgang in der Datensynchronisationsaufgabe fehlschlägt, wenn das Schreiben von Daten in eine Zielvorrichtung fehlschlägt oder eine Zeitüberschreitung auftritt.

3. Verfahren nach Anspruch 1, wobei der Schritt des Berechnens einer Wiederholungszeitbasis gemäß einem voreingestellten Intervall Folgendes umfasst:
Erfassen von aktuellen Wiederholungszeiten, und
Berechnen des Produktes aus dem voreingestellten Intervall und den aktuellen Wiederholungszeiten als Zeitbasis; oder
Verwenden der aktuellen Wiederholungszeiten als Exponent, um das voreingestellte Intervall als Zeitbasis zu erhöhen.

4. Verfahren nach einem der Ansprüche 1 bis 3, wobei vor dem Schritt des Sammelns von Statistiken über einen Fortschritt der Aufgabe das Verfahren ferner Folgendes umfasst:
Beurteilen, ob der Vorgang erneut ausgeführt werden muss; und
beim Beurteilen, dass der Vorgang erneut ausgeführt werden muss, Ausführen des Schrittes des Sammelns von Statistiken über einen Fortschritt der Aufgabe, oder
beim Beurteilen, dass der Vorgang nicht erneut ausgeführt werden muss, Beenden der erneuten Ausführung des Vorgangs.

5. Verfahren nach Anspruch 4, wobei der Schritt des Beurteilens, ob der Vorgang erneut ausgeführt werden muss, Folgendes umfasst:
Beurteilen, ob eine Zeitbedingung und/oder eine Zustandsbedingung erfüllt ist; und
beim Beurteilen, dass die Zeitbedingung und/oder die Zustandsbedingung erfüllt ist, Bestimmen, dass der Vorgang nicht erneut ausgeführt werden muss, oder
beim Beurteilen, dass die Zeitbedingung und die Zustandsbedingung nicht erfüllt sind, Bestimmen, dass der Vorgang erneut ausgeführt werden muss;
wobei die Zeitbedingung ist, dass die aktuellen Wiederholungszeiten einen voreingestellten Schwellenwert für Wiederholungszeiten überschreiten, und
wobei die Zustandsbedingung ist, dass die Aufgabe angehalten ist.

6. Vorrichtung zum Wiederholen von Vorgängen für eine Aufgabe, wobei die Vorrichtung Folgendes umfasst:
ein Aufgabenerfassungsmodul (401), das konfiguriert ist, um zu erfassen, ob ein Vorgang in der Aufgabe fehlschlägt, und um beim Erfassen, dass der Vorgang in der Aufgabe fehlschlägt, ein Fortschrittsstatistikmodul aufzurufen;
das Fortschrittsstatistikmodul (402), das konfiguriert ist, um Statistiken über einen Fortschritt der Aufgabe zu sammeln;
ein Wiederholungszeitberechnungsmodul (403), das konfiguriert ist, um eine Wiederholungszeit gemäß dem Fortschritt der Aufgabe zu berechnen, wobei das Wiederholungszeitberechnungsmodul Folgendes umfasst:
ein Untermodul zur Berechnung des inkrementellen Faktors, das konfiguriert ist, um einen inkrementellen Faktor gemäß dem Fortschritt der Aufgabe zu konfigurieren;
ein Untermodul zur Berechnung der Wiederholungszeitbasis, das konfiguriert ist, um eine Wiederholungszeitbasis gemäß einem voreingestellten Intervall zu berechnen; und
ein Inkrementanpassungsuntermodul, das konfiguriert ist, um die Wiederholungszeit gemäß dem inkrementellen Faktor und der Wiederholungszeitbasis anzupassen; und
ein Aufgabenwiederholungsmodul (404), das konfiguriert ist, um den Vorgang erneut auszuführen, nachdem auf die berechnete Wiederholungszeit gewartet wurde.

7. Vorrichtung nach Anspruch 6, wobei das Aufgabenerfassungsmodul Folgendes umfasst:
ein erstes Bestimmungsuntermodul, das konfiguriert ist, um zu bestimmen, dass ein Vorgang in der Datensynchronisationsaufgabe fehlschlägt, wenn das Lesen von Daten von einer Quellvorrichtung fehlschlägt oder eine Zeitüberschreitung auftritt; und/oder
ein zweites Bestimmungsuntermodul, das konfiguriert ist, um zu bestimmen, dass ein Vorgang in der Datensynchronisationsaufgabe fehlschlägt, wenn Interaktion mit einem Datensynchronisationsdienst fehlschlägt oder eine Zeitüberschreitung auftritt; und/oder
ein drittes Bestimmungsuntermodul, das konfiguriert ist, um zu bestimmen, dass ein Vorgang in der Datensynchronisationsaufgabe fehlschlägt, wenn das Schreiben von Daten in eine Zielvorrichtung fehlschlägt oder eine Zeitüberschreitung auftritt.

8. Vorrichtung nach Anspruch 7, wobei das Untermodul zur Berechnung der Wiederholungszeitbasisbasis Folgendes umfasst:
eine Einheit zum Erwerben von Wiederholungszeiten, die konfiguriert ist, um aktuelle Wiederholungszeiten zu erwerben; und
eine Konstantenberechnungseinheit, die konfiguriert ist, um das Produkt aus dem voreingestellten Intervall und den aktuellen Wiederholungszeiten als Zeitbasis zu berechnen, oder
eine Exponentenberechnungseinheit, die konfiguriert ist, um die aktuellen Wiederholungszeiten als Exponent zu verwenden, um das voreingestellte Intervall als Zeitbasis zu erhöhen.

9. Vorrichtung nach einem der Ansprüche 6 bis 8, ferner umfassend:
ein Wiederholungsbestimmungsmodul, das für Folgendes konfiguriert ist:
Beurteilen, ob der Vorgang erneut ausgeführt werden muss,
beim Beurteilen, dass der Vorgang erneut ausgeführt werden muss, Aufrufen des Fortschrittsstatistikmoduls, und
beim Beurteilen, dass der Vorgang nicht erneut ausgeführt werden muss, Aufrufen eines Wiederholungsbeendigungsmoduls; und
wobei das Wiederholungsbeendigungsmodul konfiguriert ist, um die erneute Ausführung des Vorgangs zu beenden.

10. Vorrichtung nach Anspruch 9, wobei das Wiederholungsbestimmungsmodul Folgendes umfasst:
ein Bedingungsbeurteilungsuntermodul, das für Folgendes konfiguriert ist:
Beurteilen, ob eine Zeitbedingung und/oder eine Zustandsbedingung erfüllt ist,
beim Beurteilen, dass die Zeitbedingung und/oder die Zustandsbedingung erfüllt ist, Aufrufen eines vierten Bestimmungsuntermoduls, und
beim Beurteilen, dass die Zeitbedingung und die Zustandsbedingung nicht erfüllt sind, Aufrufen eines fünften Bestimmungsuntermoduls;
wobei das vierte Bestimmungsuntermodul konfiguriert ist, um zu bestimmen, dass der Vorgang nicht erneut ausgeführt werden muss; und
wobei das fünfte Bestimmungsuntermodul konfiguriert ist, um zu bestimmen, dass der Vorgang erneut ausgeführt werden muss;
wobei die Zeitbedingung ist, dass die aktuellen Wiederholungszeiten einen voreingestellten Schwellenwert für Wiederholungszeiten überschreiten, und
wobei die Zustandsbedingung ist, dass die Aufgabe angehalten ist.

11. Computerlesbares Medium, das Anweisungen speichert, die, wenn sie durch einen Prozessor ausgeführt werden, einen Computer dazu veranlassen, das Verfahren nach einem der Ansprüche 1 bis 5 durchzuführen.

12. Computerprogrammprodukt, das Anweisungen umfasst, die, wenn sie durch einen Computer ausgeführt werden, den Computer dazu veranlassen, das Verfahren nach einem der Ansprüche 1 bis 5 durchzuführen.

## Revendications

1. Procédé de relance d'opération mis en œuvre par ordinateur pour une tâche, comprenant :
la détection (101, 301) si une opération dans la tâche échoue ; et
à la détection que l'opération dans la tâche échoue :
la collecte de statistiques (102, 304) sur une progression de la tâche ;
la configuration d'un facteur incrémentiel en fonction de la progression de la tâche ;
le calcul d'une base de temps de relance en fonction d'un intervalle prédéfini ;
le calcul d'un temps de relance en fonction du facteur incrémentiel et de la base de temps de relance ; et
la ré-exécution (104, 306) de l'opération après avoir attendu le temps de relance calculé.

2. Procédé selon la revendication 1, dans lequel la tâche est une tâche de synchronisation de données, et l'étape de détection si une opération dans la tâche échoue comprend :
la détermination qu'une opération dans la tâche de synchronisation de données échoue lorsque la lecture de données à partir d'un dispositif source échoue ou expire ; et / ou
la détermination qu'une opération dans la tâche de synchronisation de données échoue lorsque l'interaction avec un service de synchronisation de données échoue ou expire ; et / ou
la détermination qu'une opération dans la tâche de synchronisation de données échoue lorsque l'écriture de données dans un dispositif de destination échoue ou expire.

3. Procédé selon la revendication 1, dans lequel l'étape de calcul d'une base de temps de relance en fonction d'un intervalle prédéfini comprend :
l'acquisition de temps de relance actuels, et
le calcul du produit de l'intervalle prédéfini et des temps de relance actuels comme la base de temps ; ou
l'utilisation des temps de relance actuels comme exposant pour augmenter l'intervalle prédéfini comme la base de temps.

4. Procédé selon l'une quelconque des revendications 1 à 3, dans lequel, avant l'étape de collecte de statistiques sur la progression de la tâche, le procédé comprend en outre :
l'évaluation si l'opération doit être ré-exécutée ; et
à l'évaluation que l'opération doit être ré-exécutée, l'exécution de l'étape de collecte de statistiques sur une progression de la tâche, ou
à l'évaluation que l'opération n'a pas besoin d'être ré-exécutée, l'arrêt de la ré-exécution de l'opération.

5. Procédé selon la revendication 4, dans lequel l'étape d'évaluation si l'opération doit être ré-exécutée comprend :
l'évaluation si une condition de temps et / ou une condition d'état est satisfaite ; et
à l'évaluation que la condition de temps et / ou la condition d'état est satisfaite, la détermination que l'opération n'a pas besoin d'être ré-exécutée, ou
à l'évaluation que la condition de temps et la condition d'état ne sont pas satisfaites, la détermination que l'opération doit être ré-exécutée ;
dans lequel la condition de temps est que les temps de relance actuels dépassent un seuil de temps de relance prédéfini, et
dans lequel la condition d'état est que la tâche est arrêtée.

6. Appareil de relance d'opération pour une tâche, l'appareil comprenant :
un module de détection de tâche (401) configuré pour détecter si une opération dans la tâche échoue et, à la détection que l'opération dans la tâche échoue, pour appeler un module de statistiques de progression ;
le module de statistiques de progression (402) configuré pour collecter des statistiques sur une progression de la tâche ;
un module de calcul de temps de relance (403) configuré pour calculer un temps de relance en fonction de la progression de la tâche, le module de calcul de temps de relance comprenant :
un sous-module de calcul de facteur incrémentiel configuré pour configurer un facteur incrémentiel en fonction de la progression de la tâche ;
un sous-module de calcul de base de temps de relance configuré pour calculer une base de temps de relance en fonction d'un intervalle prédéfini ; et
un sous-module d'ajustement d'incrément configuré pour ajuster le temps de relance en fonction du facteur incrémentiel et de la base de temps de relance ; et
un module de relance de tâche (404) configuré pour ré-exécuter l'opération après avoir attendu le temps de relance calculé.

7. Appareil selon la revendication 6,
dans lequel le module de détection de tâche comprend :
un premier sous-module de détermination configuré pour déterminer qu'une opération dans la tâche de synchronisation de données échoue lorsque la lecture de données à partir d'un dispositif source échoue ou expire ; et / ou
un deuxième sous-module de détermination configuré pour déterminer qu'une opération dans la tâche de synchronisation de données échoue lorsque l'interaction avec un service de synchronisation de données échoue ou expire ; et / ou
un troisième sous-module de détermination configuré pour déterminer qu'une opération dans la tâche de synchronisation de données échoue lorsque l'écriture de données dans un dispositif de destination échoue ou expire.

8. Appareil selon la revendication 7, dans lequel le sous-module de calcul de base de temps de relance comprend :
une unité d'acquisition de temps de relance configurée pour acquérir des temps de relance actuels ; et
une unité de calcul de constante configurée pour calculer le produit de l'intervalle prédéfini et des temps de relance actuels comme la base de temps, ou
une unité de calcul d'exposant configurée pour utiliser les temps de relance actuels comme exposant pour augmenter l'intervalle prédéfini comme la base de temps.

9. Appareil selon l'une quelconque des revendications 6 à 8, comprenant en outre : un module de détermination de relance configuré pour :
évaluer si l'opération doit être ré-exécutée,
à l'évaluation que l'opération doit être ré-exécutée, appeler le module de statistiques de progression, et
à l'évaluation que l'opération n'a pas besoin d'être ré-exécutée, appeler un module d'arrêt de relance ; et
le module de sortie de relance configuré pour arrêter la ré-exécution de l'opération.

10. Appareil selon la revendication 9, dans lequel le module de détermination de relance comprend :
un sous-module d'évaluation de condition configuré pour :
évaluer si une condition de temps et / ou une condition d'état est satisfaite,
à l'évaluation que la condition de temps et / ou la condition d'état est satisfaite, appeler un quatrième sous-module de détermination, et
à l'évaluation que la condition de temps et la condition d'état ne sont pas satisfaites, appeler un cinquième sous-module de détermination ;
le quatrième sous-module de détermination configuré pour déterminer que l'opération n'a pas besoin d'être ré-exécutée ; et
le cinquième sous-module de détermination configuré pour déterminer que l'opération doit être ré-exécutée ;
dans lequel la condition de temps est que les temps de relance actuels dépassent un seuil de temps de relance prédéfini, et
dans lequel la condition d'état est que la tâche est arrêtée.

11. Support lisible par ordinateur stockant des instructions qui, lorsqu'elles sont exécutées par un processeur, amènent un ordinateur à exécuter le procédé selon l'une quelconque des revendications 1 à 5.

12. Produit de programme informatique comprenant des instructions qui, lorsqu'elles sont exécutées par un ordinateur, amènent l'ordinateur à exécuter le procédé selon l'une quelconque des revendications 1 à 5.
